# EUROPÄISCHE PATENTANMELDUNG

(11) **EP 2 530 536 A1**
(43) Veröffentlichungstag der Anmeldung: **05.12.2012**
(21) Anmeldenummer: 11168051.8
(22) Anmeldetag: 30.05.2011
(51) Int. Cl.: G05B 19/042, G02B 6/42, H01R 9/26

(54) **Stecker mit einem optischen - elektrischen Signalkonverter**

(71) Anmelder: SIEMENS AKTIENGESELLSCHAFT, 80333 München (DE)
(72) Erfinder: Jänicke, Peter, 91058 Erlangen (DE); Schwesig, Günter, 91054 Erlangen (DE); Wetzel, Ulrich, 91325 Adelsdorf (DE)

(57) **Zusammenfassung**

Angegeben wird ein System (10) umfassend ein über eine Kommunikationsleitung (12) kommunikativ mit anderen Automatisierungsgeräten verbindbares Automatisierungsgerät (14) und einen mit einer Kommunikationsleitung (12)verbunden oder verbindbaren Stecker (16), wobei das Automatisierungsgerät (14) für den Stecker (16) eine korrespondierende Steckeraufnahme (18) aufweist, wobei sich das System (10) dadurch auszeichnet, dass der Stecker (16) eine Konvertierungseinheit (24) zum Konvertieren von ein- und ausgehenden Signalen für das Automatisierungsgerät (14) und vom Automatisierungsgerät (14) von einer ersten Übertragungstechnik in eine zweite Übertragungstechnik und umgekehrt umfasst.

## Beschreibung

Die Erfindung betrifft ein System, das ein über eine Kommunikationsleitung kommunikativ mit anderen Automatisierungsgeräten verbindbares Automatisierungsgerät einerseits und einen mit einer Kommunikationsleitung verbunden oder verbindbaren Stecker andererseits umfasst.

Über Kommunikationsleitungen kommunikativ verbindbare Automatisierungsgeräte sind an sich bekannt. Bekannt ist ebenfalls, eine Kommunikationsleitung lösbar mit einem Automatisierungsgerät über einen an der Kommunikationsleitung angebrachten Stecker und eine im oder am Automatisierungsgerät vorgesehene, korrespondierende Steckeraufnahme zu verbinden.

Der Begriff Automatisierungsgerät umfasst sämtliche Geräte, Einrichtungen oder Systeme, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

In der Industrie und auch generell werden Systeme und Geräte eingesetzt, die über serielle Busse miteinander kommunizieren, also kommunikativ verbunden oder verbindbar sind. Die Verbindung zwischen den einzelnen Geräten, zum Beispiel Automatisierungsgeräten der oben genannten Art, und die Übertragung der seriellen Signale erfolgt meist leitungsgebunden, zum Beispiel mit elektrischen Signalen über Kupferleitungen oder dergleichen. Zur Verbindung der Kommunikationsleitungen und der jeweiligen Geräte sind zumeist spezielle Steckverbinder (Stecker und korrespondierende Steckeraufnahme) vorgesehen. Abhängig von einer Bitrate, einer Ausführung der Kommunikationsleitungen, einer Ausführung der Steckverbinder und den jeweiligen Leitungslängen wird eine bestimmte Kommunikationsleistung (Performance) erreicht.

Eine Entwicklung eines neuen (Automatisierungs-)Gerätes berücksichtigt normalerweise die jeweils aktuellsten Techniken oder die jeweiligen Anforderungen, zum Beispiel in Bezug auf die kommunikative Verbindbarkeit und die Kommunikationsleistung. Nach Markteinführung eines solchen neuen Gerätes ergeben sich üblicherweise neue oder zusätzliche Anforderungen, die erfahrungsgemäß noch bis zu einem gewissen Grad in das neue Gerät eingebracht werden können. Bei besonderen neuen Anforderungen ist jedoch oftmals keine Berücksichtigung möglich.

Eine Aufgabe der Erfindung besteht entsprechend darin, eine von erhöhter Flexibilität gekennzeichnete Anpassungsmöglichkeit von Automatisierungsgeräten an sich ändernde Anforderungen hinsichtlich der kommunikativen Verbindbarkeit mit anderen Automatisierungsgeräten zu anzugeben.

Diese Aufgabe wird mit einem System mit den Merkmalen des Anspruchs 1 gelöst. Dazu ist bei einem System, das zumindest einerseits ein über eine Kommunikationsleitung kommunikativ mit anderen Automatisierungsgeräten verbundenes oder verbindbares Automatisierungsgerät und andererseits einen mit einer Kommunikationsleitung verbunden oder verbindbaren Stecker umfasst, wobei das Automatisierungsgerät für den Stecker eine korrespondierende Steckeraufnahme aufweist, vorgesehen, dass der Stecker eine Konvertierungseinheit zum Konvertieren von ein- und ausgehenden Signalen für das Automatisierungsgerät und vom Automatisierungsgerät von einer ersten Übertragungstechnik in eine zweite Übertragungstechnik und umgekehrt umfasst.

Der Vorteil eines solchen Systems besteht darin, dass mit der Konvertierungseinheit im Stecker des Verbindungskabels eine Anpassung an die Übertragungstechnik oder die Übertragungsphysik aus dem jeweiligen Gerät oder Automatisierungsgerät ausgelagert und in den Stecker verlagert wird. Der Stecker wiederum ist Bestandteil des Verbindungskabels, das jeweils nach den Kommunikationsanforderungen und der daraus resultierenden Übertragungstechnik/Übertragungsphysik ausgewählt wird. Damit werden Situationen vermieden, die sich bisher zum Beispiel bei Automatisierungsgeräten ergeben, wenn diese für eine Kommunikation über Ethernet mit elektrisch übermittelten Signalen ausgelegt sind und später eine andere Übertragungsphysik gefordert wird. Bisher war bei einer solchen Situation nur der Austausch des Automatisierungsgerätes oder ggf. der Austausch einer Busanschaltung erforderlich. Letzteres war allerdings nur möglich, wenn eine solche Modularität des Automatisierungsgerätes bereits bei dessen Entwicklung vorgesehen war. Mit dem hier vorgestellten Ansatz ist jedes (Automatisierungs-)Gerät grundsätzlich unabhängig von der zu verwendenden Übertragungstechnik/Übertragungsphysik, indem eine Anpassung daran außerhalb des Geräts nämlich im Stecker der Kommunikationsleitung stattfindet. Ein weiterer Vorteil eines solchen Systems besteht darin, dass sich einfache Verhältnisse zur Wahrung der Kompatibilität mehrerer Gerätegenerationen ergeben: Selbst wenn sich die Übertragungstechnik ändert, kann ein und dasselbe Gerät über die jeweiligen Kommunikationsleitungen aufgrund der in deren Steckern vorgesehenen Konvertierungseinheit an andere oder innovierte Kommunikationssysteme angeschlossen werden. In gleicher Weise besteht auch gleichsam eine Abwärtskompatibilität, indem die von der Konvertierungseinheit bewirkte Umsetzung von Signalen für eine erste Übertragungstechnik in solche für eine zweite Übertragungstechnik zum Beispiel auch eine Umsetzung von vom Gerät erzeugten optischen Signalen, die an sich zur Übermittlung über Lichtwellenleiter vorgesehen sind, in elektrische Signale zur Übermittlung über Kupferleitungen bedeuten kann. Vorteilhafte Ausgestaltungen des Ansatzes sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Eingangs genannten Systems ist vorgesehen, dass die erste Übertragungstechnik eine leitungsgebundene Übertragung elektrischer Signale und die zweite Übertragungstechnik eine leitungsgebundene Übertragung optischer Signale bietet und erfordert. Wenn die Konvertierungseinheit die Konvertierung von ein- und ausgehenden Signalen für das Automatisierungsgerät und vom Automatisierungsgerät zwischen diesen beiden Übertragungstechniken beherrscht, sind mit der auf der Übertragung elektrischer Signale basierenden Übertragungstechnik auf der einen Seite die derzeit am weitesten verbreitete Übertragungstechnik und mit der auf der Übertragung optischer Signale basierenden Übertragungstechnik auf der anderen Seite eine zukünftigen Anforderungen voraussichtlich noch auf absehbare Zeit genügende Übertragungstechnik abgedeckt.

Bei einer weiteren Ausführungsform ist vorgesehen, dass das Automatisierungsgerät an seiner Steckeraufnahme elektrische Signale generiert und erwartet und die Konvertierungseinheit im kommunikationsleitungsseitigen Stecker als Mittel zum Konvertieren von über die Kommunikationsleitung für das Automatisierungsgerät eingehenden optischen Signalen in entsprechende elektrische Signale und zum Konvertieren von vom Automatisierungsgerät ausgesandten elektrischen Signalen in optische Signale zur Weiterleitung über die Kommunikationsleitung fungiert. Die Konvertierungseinheit bewirkt somit eine Umsetzung elektrischer Signale in optische Signale und umgekehrt.

Bei einer alternativen Ausführungsform ist vorgesehen, dass das Automatisierungsgerät an seiner Steckeraufnahme optische Signale generiert und erwartet und die Konvertierungseinheit im kommunikationsleitungsseitigen Stecker als Mittel zum Konvertieren von über die Kommunikationsleitung für das Automatisierungsgerät eingehenden elektrischen Signalen in entsprechende optische Signale und zum Konvertieren von vom Automatisierungsgerät ausgesandten optischen Signalen in elektrische Signale zur Weiterleitung über die Kommunikationsleitung fungiert. Die Konvertierungseinheit bewirkt somit eine Umsetzung optischer Signale in elektrische Signale und umgekehrt.

Der hier beschriebene Ansatz betrifft nicht nur das System mit mindestens einem Automatisierungsgerät und mindestens einem Stecker sondern auch dessen einzelne Elemente, nämlich ein in einem solchen System verwendbares Automatisierungsgerät einerseits und einen in einem solchen System verwendbaren Stecker andererseits.

Für eine besondere Ausführungsform eines derartigen Automatisierungsgerätes ist dabei eine Kommunikationsanschaltung für Datenübertragungsraten mit mindestens zehn Gigabit vorgesehen. Eine solche Datenübertragungsrate erlaubt einen ausreichend hohen Durchsatz bei der Kommunikation mit anderen Automatisierungsgeräten. Als Kommunikationsanschaltung umfasst das Automatisierungsgerät dafür zum Beispiel einen sogenannten 10GB MAC (MAC = Media Access Controller) und einen sogenannten 10GB PHY, wobei PHY bekanntlich eine Kurzbezeichnung für "physikalische Schnittstelle" ist und in der Fachterminologie einen integrierten Schaltkreis oder eine Funktionalität eines solchen Schaltkreises bezeichnet, der bzw. die für die Kodierung und Dekodierung von Daten zwischen dem Automatisierungsgerät als einem rein digitalen System und der Kommunikationsleitung als einem modulierten analogen System zuständig ist.

Bei einer Ausführungsform eines in dem System verwendeten oder verwendbaren Steckers ist eine Konvertierungseinheit zur Konvertierung von Ethernet als erster Übertragungsphysik auf eine optische Übertragung über einen Lichtwellenleiter als zweiter Übertragungsphysik und umgekehrt vorgesehen. Ein solcher Stecker oder eine Kommunikationsleitung mit einem solchen Stecker erlaubt die Verwendung von daran angeschlossenen oder anschließbaren Automatisierungsgeräten sowohl in Kommunikationsnetzen mit 10-Mbit/s-Ethernet oder 100-Mbit/s-Ethernet mit Kupferkabel (Koaxial, Twisted-Pair, etc.) wie auch in Kommunikationsnetzen mit 1- und 10-Gbit/s-Ethernet mit Lichtwellenleiter.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein System mit einem Automatisierungsgerät und einen mit einer Kommunikationsleitung verbunden Stecker nach dem Stand der Technik,
- FIG 2: ein System mit einem für mehrere Übertragungstechniken verwendbaren Automatisierungsgerät,
- FIG 3: ein System mit einem für mehrere Übertragungstechniken verwendbaren Automatisierungsgerät gemäß dem hier vorgestellten Ansatz und
- FIG 4: eine alternative Ausführungsform des Systems gemäß FIG 3.

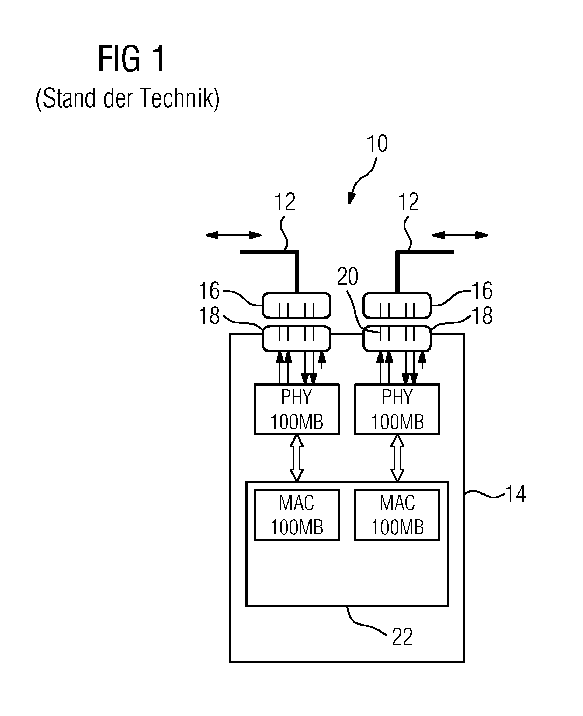

FIG 1 zeigt ein System 10, das ein über eine Kommunikationsleitung 12 kommunikativ mit anderen, nicht dargestellten Automatisierungsgeräten verbindbares Automatisierungsgerät 14 einerseits und einen mit der Kommunikationsleitung 12 verbunden Stecker 16 andererseits umfasst. Dargestellt ist eine Konfiguration nach dem Stand der Technik, so dass es sich bei der Kommunikationsleitung 12 um eine Kupferleitung handelt.

Bei der dargestellten Ausführungsform ist das Automatisierungsgerät 14 über zwei Kommunikationsleitungen 12 mit anderen Automatisierungsgeräten verbunden oder verbindbar, wobei die beiden Kommunikationsleitungen 12 (eingehende Kommunikationsleitung und ausgehende Kommunikationsleitung) zu einem Bus gehören und jedes Automatisierungsgerät 14 Kommunikationsteilnehmer in einem solchen Bus ist, in dem also Telegramme sequentiell an alle über den Bus zusammengeschlossenen Automatisierungsgeräte gelangen. Der hier beschriebene Ansatz eignet sich grundsätzlich für jede Bustopologie und jede Art der kommunikativen Verbindung eines Automatisierungsgeräts 14 mit anderen Automatisierungsgeräten.

Zum Kombinieren des Steckers 16 mit dem Automatisierungsgerät 14 weist dieses eine korrespondierende Steckeraufnahme 18 auf. Bei dem Stecker 16 und der Steckeraufnahme 18 handelt es sich zum Beispiel um sogenannte RJ-Steckverbindungen, insbesondere um RJ-45-Steckverbindungen. Diese weisen in an sich bekannter Art und Weise und entsprechend der Ausführung der Kommunikationsleitung 12 als Kupferleitung Kupferkontakte 20 auf.

Als Kommunikationsanschaltung weist das Automatisierungsgerät als Funktionseinheiten eines Mikrokontrollers 22 eine erste und eine zweite sogenannte MAC (MAC = Media Access Controller) auf. Des Weiteren ist als physikalische Schnittstelle eine erste und zweite sogenannte PHY vorgesehen. Sämtliche Komponenten sind für Datenübertragungsraten bis 100 Mbit pro Sekunde ausgelegt.

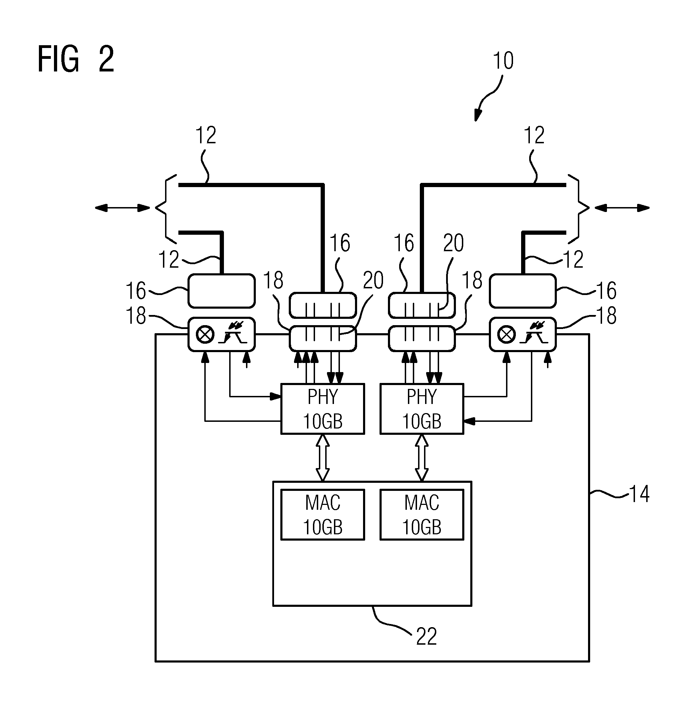

FIG 2 zeigt eine triviale Lösung für das eingangs formulierte Problem, nämlich ein Automatisierungsgerät 14 mit erhöhter Flexibilität hinsichtlich der kommunikativen Verbindbarkeit mit anderen Automatisierungsgeräten zu schaffen. Insoweit weist das Automatisierungsgerät 14 über das in FIG 1 gezeigte Automatisierungsgerät 14 hinaus (auf dessen Beschreibung zur Vermeidung von Wiederholungen hier verwiesen wird) Mittel zum Anschluss an Kommunikationsleitungen 12 in Form von Kupferleitungen und Mittel zum Anschluss an Kommunikationsleitungen 12 in Form von Lichtwellenleitern auf.

Das in FIG 2 gezeigte Automatisierungsgerät 14 ist an Kommunikationsleitungen 12 in Form von Kupferleitungen einerseits und an Kommunikationsleitungen 12 in Form von Lichtwellenleitern andererseits anschließbar und in FIG 2 als an solche Kommunikationsleitungen 12 angeschlossen dargestellt. Dafür weist das Automatisierungsgerät 14 eine erste Gruppe von Steckeraufnahmen 18 zur Aufnahme von an den Kupferleitungen vorgesehenen Steckern 16 mit Kupferkontakten 20 und eine zweit Gruppe von Steckeraufnahmen 18 zur Aufnahme von an den Lichtwellenleitern vorgesehenen Steckern 16 auf. Zur Erhöhung der für das Automatisierungsgerät möglichen Datenübertragungsrate sind die zur Kommunikationsanschaltung gehörenden Einheiten, nämlich MAC und PHY, auf bis zu 10GB ausgelegt.

Eine solche triviale Lösung ermöglicht zwar die Verwendung unterschiedlicher Übertragungstechniken und die Anschließbarkeit des Automatisierungsgeräts 14 an unterschiedliche Übertragungsphysik, verteuert jedoch das Automatisierungsgerät 14 insgesamt, indem die Anschlussmittel, nämlich zumindest die Steckeraufnahmen 18 und in diesen zumindest teilweise Optokoppler zur Umwandlung elektrischer Signale in optische Signale und umgekehrt, doppelt benötigt werden. Zudem erhöht sich unter Umständen die Baugröße des Automatisierungsgeräts 14, was angesichts der bekanntlich stets angestrebten Miniaturisierung und weiterhin angesichts der oftmals gegebenen Notwendigkeit, solche Automatisierungsgeräte 14 als Module mit anderen Automatisierungsgeräten zu kombinieren, ungünstig ist.

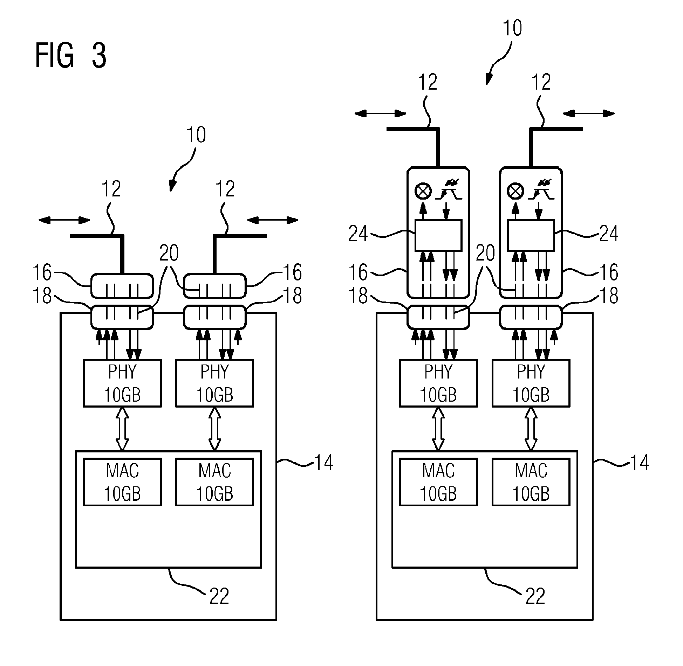

FIG 3 zeigt dagegen - und zwar auf der rechten Seite - ein System 10 gemäß dem hier vorgestellten Ansatz. Auf der linken Seite ist im Wesentlichen ein System 10 wie in FIG 1 gezeigt dargestellt um die Kompatibilität des neu vorgestellten Systems 10 mit bereits im Einsatz befindlichen Einheiten, nämlich bereits im Einsatz befindlichen Automatisierungsgeräten 14 einerseits und bereits im Einsatz befindlichen Kommunikationsleitungen 12 andererseits zu verdeutlichen. Bei dem in FIG 3 auf der rechten Seite dargestellten System 10 weist jedenfalls jeder Stecker 16 der dortigen Kommunikationsleitungen 12 (Lichtwellenleiter) eine Konvertierungseinheit 24 zum Konvertieren von ein- und ausgehenden Signalen für das Automatisierungsgerät 14 und vom Automatisierungsgerät 14 von einer ersten Übertragungstechnik in eine zweite Übertragungstechnik und umgekehrt auf. Angesichts der Steckeraufnahmen 18 mit Kupferkontakten 20 auf Seiten des Automatisierungsgeräts 14 handelt es sich bei der ersten Übertragungstechnik um eine Übertragung elektrischer Signale über Kupferleitungen. Indem die Konvertierungseinheit 24 die elektrischen Signale umsetzt und Optokoppler zur Erzeugung optischer Signale oder zur Detektion optischer Signale ansteuert bzw. auswertet, handelt es sich bei der zweiten Übertragungstechnik um eine Übertragung von optischen Signalen über Lichtwellenleiter. Die Konvertierungseinheit 24 übernimmt auch etwaige Anpassungen an für die jeweilige Kommunikationsleitung 12 vorgesehene Übertragungsprotokolle. Ein und dasselbe Automatisierungsgerät 14 kann aber - wie die linke Seite der Darstellung in FIG 3 zeigt - in "konventioneller" Art und Weise in einem Kommunikationsverbund mit Kupferleitungen als Kommunikationsleitungen 12 betrieben werden.

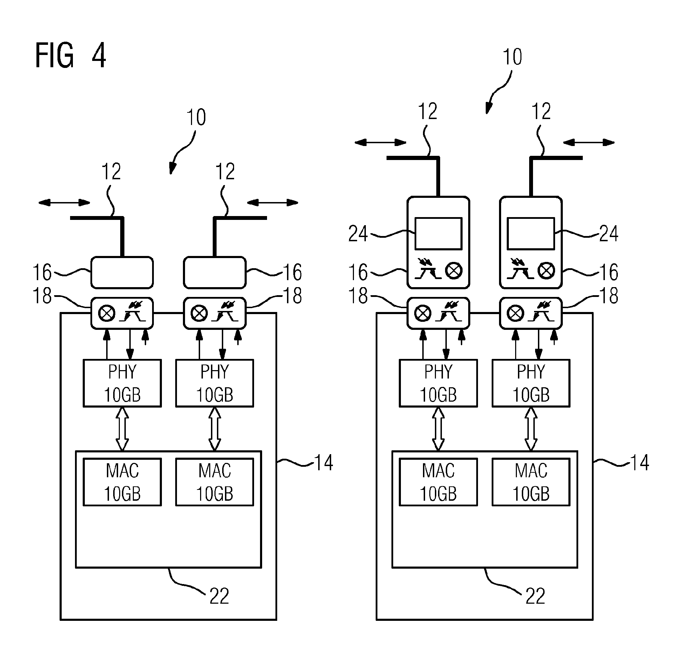

FIG 4 zeigt ein alternatives System 10 gemäß dem hier vorgestellten Ansatz. Das Automatisierungsgerät 14 ist zur Generierung und zur Verarbeitung optischer Signale zur Kommunikation mit anderen Automatisierungsgeräten vorgesehen. Das Automatisierungsgerät 14 ist also unmittelbar mit Kommunikationsleitungen 12 in Form von Lichtwellenleitern mit anderen Automatisierungsgeräten kommunikativ verbindbar, wie die Darstellung auf der linken Seite in FIG 4 zeigt. Zur kommunikativen Verbindung mit anderen Automatisierungsgeräten über Kommunikationsleitungen 12 in Form von Kupferkabeln (rechte Seite) ist vorgesehen, dass Kommunikationsleitungen 12 mit einer Konvertierungseinheit 24 im Stecker 16 verwendet werden. Genau wie bei der Situation in FIG 3 ist die Konvertierungseinheit 24 zum Konvertieren von ein- und ausgehenden Signalen für das Automatisierungsgerät 14 und vom Automatisierungsgerät 14 von einer ersten Übertragungstechnik in eine zweite Übertragungstechnik und umgekehrt vorgesehen. Im Gegensatz zu der in FIG 3 gezeigten Situation ist die erste Übertragungstechnik jetzt eine Übertragung optischer Signale und die zweite Übertragungstechnik eine Übertragung elektrischer Signale.

Die Stecker 16 mit einer davon umfassten Konvertierungseinheit 24 können in unterschiedlichen Schutzarten, z.B. IP40, IP65, usw., ausgeführt sein, um einen ausreichenden Schutz für die Konvertierungseinheit 24 zu gewährleisten. Gleichfalls - oder in Ergänzung dazu - kann vorgesehen sein, dass die Steckverbindung, also Stecker 16 und korrespondierende Steckeraufnahme 18, die Bedingungen einer solchen Schutzart erfüllt.

## Patentansprüche

1. System umfassend ein über eine Kommunikationsleitung (12) kommunikativ mit anderen Automatisierungsgeräten verbindbares Automatisierungsgerät (14) und einen mit einer Kommunikationsleitung (12)verbunden oder verbindbaren Stecker (16), wobei das Automatisierungsgerät (14) für den Stecker (16) eine korrespondierende Steckeraufnahme (18) aufweist, **dadurch gekennzeichnet , dass** der Stecker (16) eine Konvertierungseinheit (24) zum Konvertieren von ein- und ausgehenden Signalen für das Automatisierungsgerät (14) und vom Automatisierungsgerät (14) von einer ersten Übertragungstechnik in eine zweite Übertragungstechnik und umgekehrt umfasst.

2. System nach Anspruch 1, wobei die erste Übertragungstechnik eine leitungsgebundene Übertragung elektrischer Signale und die zweite Übertragungstechnik eine leitungsgebundene Übertragung optischer Signale bietet und erfordert.

3. System nach Anspruch 2, wobei das Automatisierungsgerät an seiner Steckeraufnahme (18) elektrische Signale generiert und erwartet und wobei die Konvertierungseinheit (24) im kommunikationsleitungsseitigen Stecker (16) als Mittel zum Konvertieren von über die Kommunikationsleitung (12) für das Automatisierungsgerät (14) eingehenden optischen Signalen in entsprechende elektrische Signale und zum Konvertieren von vom Automatisierungsgerät (14) ausgesandten elektrischen Signalen in optische Signale zur Weiterleitung über die Kommunikationsleitung (12) fungiert.

4. System nach Anspruch 2, wobei das Automatisierungsgerät an seiner Steckeraufnahme (18) optische Signale generiert und erwartet und wobei die Konvertierungseinheit (24) im kommunikationsleitungsseitigen Stecker (16) als Mittel zum Konvertieren von über die Kommunikationsleitung (12) für das Automatisierungsgerät (14) eingehenden elektrischen Signalen in entsprechende optische Signale und zum Konvertieren von vom Automatisierungsgerät (14) ausgesandten optischen Signalen in elektrische Signale zur Weiterleitung über die Kommunikationsleitung (12) fungiert.

5. Automatisierungsgerät (14) zur Verwendung in einem System nach einem der Ansprüche 1 bis 4, mit einer Kommunikationsanschaltung für Datenübertragungsraten mit mindestens zehn Gigabit.

6. Stecker (16) zur Verwendung in einem System nach einem der Ansprüche 1 bis 4, mit einer Konvertierungseinheit (24) von einer optischen Übertragung über einen Lichtwellenleiter als erster Übertragungsphysik auf Ethernet als zweiter Übertragungsphysik.

7. Stecker (16) nach Anspruch 6, mit einer Konvertierungseinheit (24) von Ethernet als erster Übertragungsphysik auf eine optische Übertragung über einen Lichtwellenleiter als zweiter Übertragungsphysik und umgekehrt.
